# EUROPEAN PATENT SPECIFICATION

(11) **EP 0 763 412 B1**
(45) Date of publication and mention of the grant of the patent: **13.03.2002**
(21) Application number: 96113267.7
(22) Date of filing: 19.08.1996
(51) Int. Cl.: B29B 17/00, C08J 11/12, C08J 11/10

(54) **Pyrolitic reactor for waste plastic**
Pyrolytischer Reaktor für Kunststoffabfall
Réacteur pyrolytique pour déchet en matière plastique

(30) Priority: 17.08.1995 JP 20970495
(43) Date of publication of application: 19.03.1997
(73) Proprietor: SHINAGAWA FUEL CO., LTD., Tokyo (JP)
(72) Inventor: Heima, Haruo, Ichikawa-shi, Chiba-ken (JP); Kitami, Yutaka, Yokohama-shi, Kanagawa-ken (JP); Tsuji, Minoru, Edogawa-ku, Tokyo (JP); Kuroyanagi, Sumio, Kashiwa-shi, Chiba-ken (JP); Hasegawa, Minoru, Ichikawa-shi, Chiba-ken (JP)
(74) Representative: Müller-Boré & Partner Patentanwälte

(56) References cited:
- EP-A- 0 140 811
- AT-B- 362 745
- DE-A- 4 339 327
- DE-A- 4 446 964

## Description

### TECHNICAL FIELD

This invention relates to a pyrolytic reactor for waste plastic and, more particularly, it relates to a pyrolytic reactor that can dechlorinate waste plastic at an enhanced rate.

### BACKGROUND OF THE INVENTION

In recent years, increased attention has been paid to the technology of treating mixed plastic wastes to produce solid fuel or oil in view of the need to make effective use of limited natural resources. However, the chlorine contained in polyvinylchloride that is ubiquitous in waste plastic turns into hydrogen chloride during the process of producing oil or burning solid fuel of waste plastic, which in turn corrodes the processing apparatus and contaminates the environment.

In view of this problem, the applicant of this patent application has proposed a method of physically removing polyvinylchloride and other chloride containing plastic wastes from mixed plastic wastes by utilizing their own weights and/or exposing them to blown air. However, it is difficult to completely remove polyvinylchloride and eliminate foreign objects such as glass and aluminum foil debris by such physical means and, currently, polyvinylchloride has to be chemically treated to eliminate the chloride contained therein after such a physical treatment.

Known chemical processes that can be used for treating waste plastic include the one disclosed in Japanese Patent Application Laid-Open No. 4-220432, in which waste plastic is heated to 300°C, molten and pyrolyzed to discharge hydrogen chloride and thus dechlorinate the waste plastic.

According to the proposed pyrolytic process, waste plastic is put into a reactor shell and indirectly heated by a heater arranged around the outer surface of the shell as heat is radially transmitted to the waste plastic through the shell wall. With such an arrangement, however, a sharp temperature gradient is produced throughout the wall thickness of the reactor shell to keep the inner surface of the reactor shell at a relatively low temperature. Particularly, areas of the inner surface of the reaction shell that are kept at about 130 to 140 °C are prone to corrosion when they are exposed to the hydrogen chloride produced in the shell, which can seriously damage the durability of the reactor shell.

Additionally, with such a pyrolytic process, the waste plastic in the reactor shell has to be guided to move longitudinally in the shell while it is being heated. Known guiding means include the paddle type that involves the use of a paddle like the one used in a plastic extrusion molding apparatus and the screw type disclosed in Japanese Patent Application Laid-Open No. 3-297708.

A paddle type guide means has a complicated structure typically comprising a screw blade for forwardly feeding waste plastic, a paddle blade for kneading waste plastic and another paddle blade for moving and kneading waste plastic, the blades being arranged longitudinally and linked with one another. Thus, molten waste plastic is kneaded as it moves forward in the reactor shell but problems may arise when the gap between the paddle and the shell is clogged with foreign objects contained in the waste plastic such as staples, particles of dirt, glass debris and pieces of carbonized plastic. Therefore, each of the blades of such a paddle type guide means requires precision machining using lathes and other machines and the shaft for holding them has to be provided with a keyway for engaging with the blades so that the cost of manufacturing a reactor shell comprising such a guide means will be inhibitive, particularly in view of the fact that the users of waste treatment equipment are highly cost-conscious.

On the other hand, a screw type guide means is provided with a series of helical screw blades for feeding waste plastic. Unlike the paddle type, the blades of this type of guide means cannot effectively knead the molten plastic in the reactor shell and therefore the molten plastic will more often than not show an uneven temperature distribution. The net result will be a poor pyrolytic reaction and insufficient production of hydrogen chloride. Thus, a reactor shell comprising a screw type guide means is not adapted to treat waste plastic at an enhanced rate and therefore improvements have to be made to make such a reactor shell commercially feasible.

DE-A-43 39 327 discloses a first reactor I in which molten plastic is dechlorinated and then passed to a second reactor II in which the molten plastic is oiled at a temperature higher then that in the first reactor I and then returned to the first reactor I. More specifically, the molten plastic which has been heated to more than 400°C in the second reactor II, is returned to the first reactor I in order to reduce viscosity of the molten plastic. However, at such high temperatures the corrosion of the inner walls of the first reactor I by the hydrogen chloride is very high, so that the first reactor I is damaged. The molten plastic is stirred in the first reactor I by paddle- or shovel-like elements.

AT patent 362 475 discloses a method and apparatus for obtaining coke or carbonaceous material from recycling waste plastic, wherein the starting material is subjected to a very high temperature of between 425°C and 981°C.

It is the object of the invention to provide a pyrolytic reactor that can dechlorinate waste plastic at a high rate, in particular having a high lifetime and allowing for an improved stirring and kneading.

This object is fulfilled by a pyrolytic reactor having the features disclosed in claims 1 and 6. Preferred embodiments are defined in the dependent subclaims.

According to a first aspect of the invention, the above object is achieved by providing a pyrolytic reactor for waste plastic comprising:
a reactor shell having a waste plastic inlet port arranged at a first end and a hydrogen chloride outlet and a molten plastic outlet port arranged at a second end opposite to said first end;
a heating means arranged between said waste plastic inlet port and said hydrogen chloride outlet port to heat the waste plastic in the reactor shell from the outside; and
a guide means for guiding the waste plastic in the reactor shell from said first end toward said second end; characterized by further comprising:
   a molten plastic return flow-path for holding a molten plastic draw-out port arranged at said second end and a molten plastic feedback port arranged at said first end in communication with each other; and
   an internal heating means for internally heating the waste plastic in the reactor shell.

Preferably, said molten plastic return flow-path is provided with a liquid transfer means for transferring molten plastic from said molten plastic draw-out port to said molten plastic feedback port.

Preferably, said guide means has a hollow rotary shaft extending longitudinally in said reactor shell; and
said internal heating means is comprised of a first heating fluid inlet port and a first heating fluid outlet port arranged on the outer surface of said hollow rotary shaft and held in communication with the hollow inside of said rotary shaft along with heating fluid provided to flow in through said first heating fluid inlet port, pass through the hollow inside and then flow out through said first heating fluid outlet port.

Preferably, said reactor shell has molten plastic stirring and kneading means arranged in the inside thereof.

Preferably, said stirring and kneading means is hatchet-like blades longitudinally arranged on the outer surface of said rotary shaft.

According to a second aspect of the invention, there is provided a pyrolytic reactor for waste plastic comprising:
a reactor shell having a waste plastic inlet port arranged at a first end and a hydrogen chloride outlet and a molten plastic outlet port arranged at a second end opposite to said first end;
a heating means arranged between said waste plastic inlet port and said hydrogen chloride outlet port to heat the waste plastic in the reactor shell from the outside; and
a guide means for guiding the waste plastic in the reactor shell from said first end toward said second end; characterized by further comprising:
   molten plastic stirring and kneading means arranged in the inside of said reactor shell.

Preferably, said stirring and kneading means is hatchet-like blades longitudinally arranged on said rotary shaft.

With a pyrolytic reactor for waste plastic according to the first aspect of the invention and having the above described configuration, the waste plastic fed into the reactor shell through the waste plastic inlet port at the first end thereof is guided by the guide means toward the second end where the molten plastic outlet port is arranged and, at the same time, heated by the internal and external heating means disposed between the waste plastic inlet port and the hydrogen chloride outlet port to become pyrolyzed at a temperature between 300 ° C and 340 ° C and generate hydrogen chloride, which flows out through the hydrogen chloride outlet port while the dechlorinated molten plastic flows out through the molten plastic outlet port so that the molten plastic is fed subsequently to a following step by lime adsorption if it is to be turned into oil or to a cooling step if sold fuel is to be made out of it.

The pyrolyzed molten waste plastic is partly fed back to the reactor shell by way of the molten plastic draw-out port arranged at said second end of the reactor shell, the molten plastic return flow-path and the molten plastic feedback port arranged at said first end and mixed with the waste plastic thrown in through the waste plastic inlet port to heat the latter. Thus, the sharp temperature gradient produced by the external heating means throughout the wall thickness of the reactor shell is reduced by the direct heating of the inside of the reactor shell to avoid producing low temperature areas of 130 to 140 ° C on the inner surface of the reactor shell and prevent low temperature corrosion due to hydrogen chloride from occurring so that the pyrolytic reactor may enjoy a prolonged service life. In other words, if the pyrolytic reactor treats waste plastic at a given constant rate, the entire amount of waste plastic that the reactor can process increases.

With a pyrolytic reactor according to the second aspect of the invention and provided with molten plastic stirring and kneading means arranged longitudinally in the reactor shell, the waste plastic in the reactor shell is not only guided toward the hydrogen chloride outlet port or the molten plastic outlet port but also stirred and kneaded sufficiently to realize an even heat distribution in the molten plastic as it is heated on its way toward the second end of the reactor shell so that the pyrolysis is accelerated to force out hydrogen chloride at an enhanced rate through the hydrogen chloride outlet port. Consequently, waste plastic can be fed through the waste plastic inlet port at an increased rate to remarkably raise the rate of processing waste plastic in the pyrolytic reactor. Such a pyrolytic reactor can feasibly be used for commercial applications. In other words, if the pyrolytic reactor treats waste plastic at a given constant amount of operation time, the entire amount of waste plastic that the reactor can process increases.

### BRIEF DESCRIPTION OF THE DRAWINGS

FIG. 1 is a flow chart of the process of dechlorinating waste plastic by a first embodiment of a pyrolytic reactor for waste plastic according to the invention.

FIG. 2 is a schematic perspective view of the dechlorination unit of the first embodiment.

FIG. 3 is a schematic sectional lateral view of the dechlorination unit of the first embodiment.

FIG. 4 is a schematic sectional front view of the dechlorination unit of the first embodiment.

FIG. 5 is a view similar to FIG. 3 showing a second embodiment of the invention.

FIG. 6 is a chart showing some of the results of an experiment on dechlorination of waste plastic, using the second embodiment.

### DETAILED DESCRIPTION OF THE PREFERRED EMBODIMENTS

Now, the present invention will be described in greater detail, with reference to the accompanying drawings that illustrate preferred embodiments of the invention.

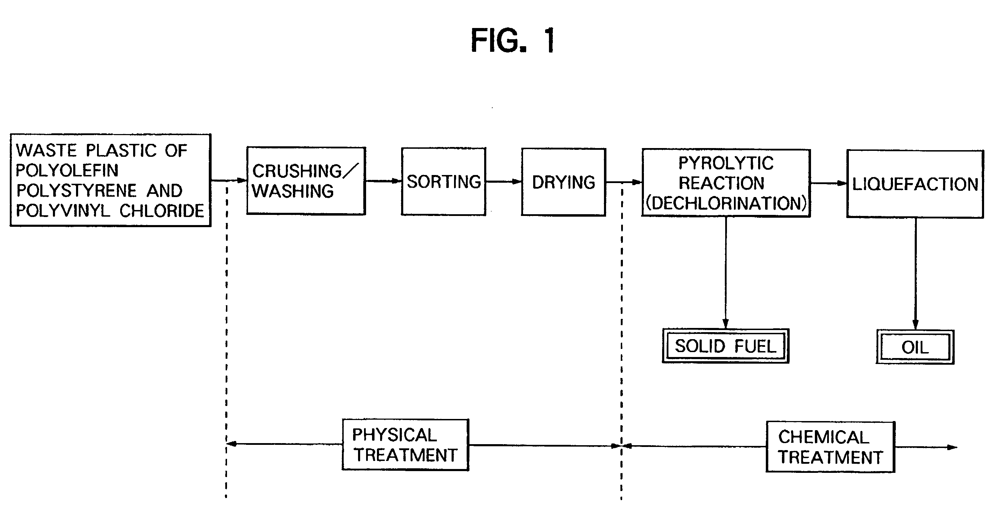

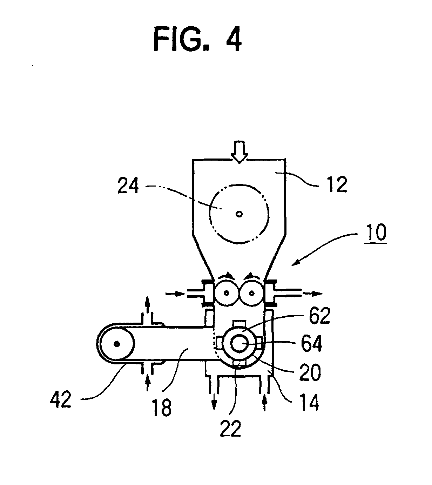

### 1st Embodiment (FIGS. 1 through 4)

FIG. 1 is a flow chart of the process of dechlorinating waste plastic by means of a first embodiment of a pyrolytic reactor for waste plastic according to the invention.

In waste treatment facilities of the type under consideration, a mixture of plastic wastes containing polyolefin, polystyrene and polyvinylchloride wastes is firstly subjected to a physical'treatment to remove foreign objects, such as pieces of steel, polyvinylchloride and glass and aluminum foil debris, as much as possible.

In this physical treatment step, waste plastic is crushed into fluffy pieces after washing them substantially having predetermined dimensions, sorted out by specific gravity either or by an air flow and then dried. In the chemical treatment process, the crushed waste plastic is pyrolyzed and then dry-processed in a specific manner depending on the form of the final fuel product, which is either oil or solid fuel. This embodiment relates to the pyrolysis of waste plastic.

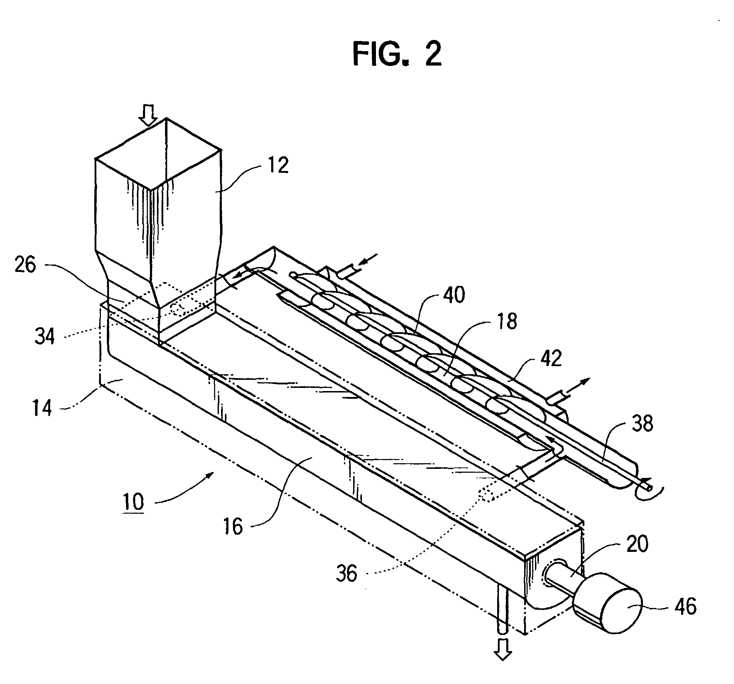

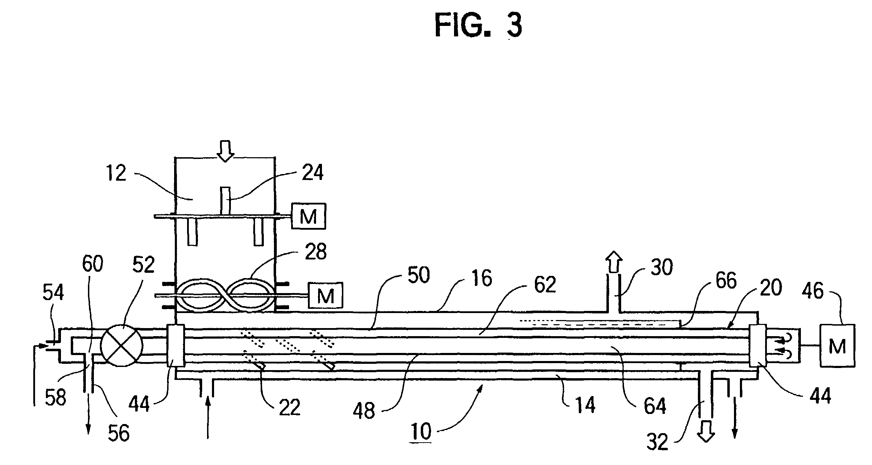

FIGS. 2 through 4 respectively show a perspective, lateral and front views of the embodiment, which is a pyrolytic reactor. Referring to FIGS. 2 and 3, the pyrolytic reactor 10 comprises a hopper 12, a cylindrical reactor shell 16 housed in an outer jacket 14, a molten plastic return flow-path 18, a double-pipe rotary shaft 20 housed in the reactor shell 16 and hatchet-like blades 22.

The hopper 12 is of a known type and held in communication with an upper portion of one end of the reactor shell 16, which reactor shell 16 will be described in greater detail hereinafter. The hopper 12 has an agitator 24 in the inside thereof. The hopper 12 also has a ribbon type feeder 28 in the inside thereof which is provided with a water-cooled jacket and disposed right above a waste plastic inlet port 26 of the reactor shell 16.

The hopper 12 is designed to be able to physically remove as much polyvinylchloride as possible, utilizing the specific gravity thereof and/or an air flow, and feed the remaining waste plastic that is made fluffy by the agitator 24 to the reactor shell 16 at a predetermined rate without clogging the waste plastic inlet port 26.

The cylindrical reactor shell 16 extends horizontally and is provided with the waste plastic outlet port 26 located at said upper portion near said one end thereof, a hydrogen chloride outlet port 30 located at an upper portion near the other end of the shell 16, and a molten plastic outlet port 32 located also near said other end of the shell but at a lower portion thereof. The shell 16 is also provided with a feedback port 34 and a draw-out port 36 arranged respectively at said one end and said other end for the molten plastic return flow-path 18. Note that the draw-out port 36 is located downstream relative to the hydrogen chloride outlet port 30 and upstream relative to the molten plastic outlet port 32. With such an arrangement, the waste plastic fed from the hopper 12 is mixed with and heated by part of the pyrolyzed molten plastic drawn out through the draw-out port 36 and fed back through the feedback port 34 as indicated by arrows in FIG. 2. Oil operating as a heat medium is made to flow through the gap between the reactor shell 16 and the outer jacket 14 to externally heat the waste plastic contained in the reactor shell 16. In other words, the outer jacket 14 operates as an external heating means.

The molten plastic return flow-path 18 extends between the draw-out port 36 and the feedback port 34 and contains therein a feed screw 40 fitted to a rotary shaft 38 that is linked to and driven by an external motor (not shown) to move the molten plastic drawn out through the draw-out port 36 to the feedback port 34. Alternatively, molten plastic may be drawn out through the draw-out port 36 and moved forward by means of a pump. The molten plastic return flow-path 18 is also provided with a heating means 42 comprising heat medium oil that flows outside the molten plastic return flow-path 18 along a route indicated by arrows in FIG. 2 in order to prevent the moving molten plastic from being cooled and solidified. The heating means 42 may alternatively comprise a heater.

As seen from FIG. 3, the double-pipe rotary shaft 20 coaxially extends in the reactor shell 16 and is supported at the opposite ends-of the latter by means of bearings 44 fitted to the reactor shell 16. The double-pipe rotary shaft 20 is linked to an external motor 46 so that it is rotated around the axis of the reactor shell 16 by the motor 46.

The double-pipe rotary shaft 20 comprises an inner pipe 48 and an outer pipe 50 that are coaxial relative to each other. The inner pipe 48 is supported by the outer pipe 50 via a rotary joint 52. The outer pipe 50 is provided at an end exposed to the outside of the reactor shell 16 with a first heat medium oil inlet port 54 and a first heat medium oil outlet port 58 located close to the inlet port 54. A heat medium oil lead-out pipe 56 communicates with the inner pipe 48 and runs through said first heat medium oil outlet port 58. On the other hand, the inner pipe 48 is provided with a second heat medium oil outlet port 60 communicating with the heat medium oil lead-out pipe 56 and the inside of the inner pipe 48 communicates at the end of the outer pipe 50 located opposite to the outlet port 60 with a first flow path 62, or the gap between the inner pipe 48 and the outer pipe 50, so that the heat medium oil introduced through the first heat medium oil inlet port 54 flows through the first flow path 62, turns back at the end thereof and then runs through a second flow path 64 in the inner pipe 48, the second heat medium oil outlet port 60 and the heat medium oil lead-out pipe 56 before it is forced out from the first heat medium oil outlet port 58.

A notched circular barrier 66 is securely fitted to the reactor shell 16 to substantially cover the cross section of the latter at a position between the draw-out port 36 and the molten plastic outlet port 32. The notch of the barrier 66 is located at an upper area of the reactor shell 16 so that the barrier 66 partially blocks the flow of molten plastic in the reactor shell 16 to force most of it out through the draw-out port 36 so that only the molten plastic that flows over the barrier 66 may go out through said molten plastic outlet port 32.

A number of the hatchet-like blades 22 are securely fitted to the outside of the outer pipe 50 and arranged longitudinally along the reactor shell 16 as partly shown in FIG. 3 in such a way that they rotate around the axis of the double-pipe rotary shaft 20 as the latter is rotated. The hatchet-like blades, which may be of any known plate type or rod type, are arranged angularly at regular intervals around the double-pipe rotary shaft 20 and secured to the outer surface of the latter by means of bolts or welding. They are designed to satisfactorily stir and knead the molten plastic contained in the reactor shell 16 and, at the same time, prevent a clogged state from occurring in the reactor shell 16 due to foreign objects. As seen from FIG. 3, the hatchet-like blades are arranged aslant relative to the cross section that is perpendicular to the axis of the double-pipe rotary shaft in such a away that the waste plastic in the reactor shell 16 is guided toward the hydrogen chloride outlet port 30 and the molten plastic outlet port 32. While the number of the blades is four or six in this embodiment, another appropriate number of blades may alternatively be selected depending on the rate of processing waste plastic.

A pyrolytic reactor having a configuration as described above operates in the following manner.

Crushed waste plastic from which hydrogen chloride and foreign objects are physically removed is fed into the hopper 12 and agitated there before it is further fed into the reactor shell 16 through the waste plastic inlet port 26 at a predetermined rate. The waste plastic fed into the reactor shell 16 is then mixed with molten plastic flowing into the shell by way of the molten plastic return flow-path 18 and the feedback port 34 and heated from the ambient temperature to about 250°C , at which it also becomes molten. The mixed molten and waste plastic is guided along the axis of the reactor shell 16 toward the hydrogen chloride outlet port 30 by the rotary motion of the hatchet-like blades 22, while being heated both from the external and from the internal respectively by the inside and outside heating means to about 300 °C to 340 °C. The heated molten plastic is sufficiently stirred and kneaded by the rotating hatchet-like blades 22 to produce an even and uniform temperature distribution therein, which accelerates the pyrolysis of waste plastic. The hydrogen chloride generated by the reaction in the reactor shell 16 flows out through the hydrogen chloride outlet port 30 and is fed to and processed by a neutralizing apparatus (not shown). Note that the thermal load for heating fluffy waste plastic to 250 °C in order to melt the latter is partly carried by the excessive heat of the molten plastic that has been pyrolyzed and is being fed back through the molten plastic return flow-path 18 of the reactor shell 16 to reduce the temperature gradient throughout the wall thickness of the reactor shell 16, and hence the above mentioned risk of low temperature corrosion of the inside of the reactor shell 16 that is held in contact with hydrogen chloride. On the other hand, the dechlorinated molten plastic flows over the barrier 66 and proceeds longitudinally in the reactor shell 16 until it goes out through the molten plastic outlet port 32. In order to produce oil from the collected molten plastic, the latter has to be dry-processed with lime and/or other chemicals. On the other hand, to produce solid fuel from the collected molten plastic, the latter may simply be cooled and solidified to terminate the dechlorination treatment.

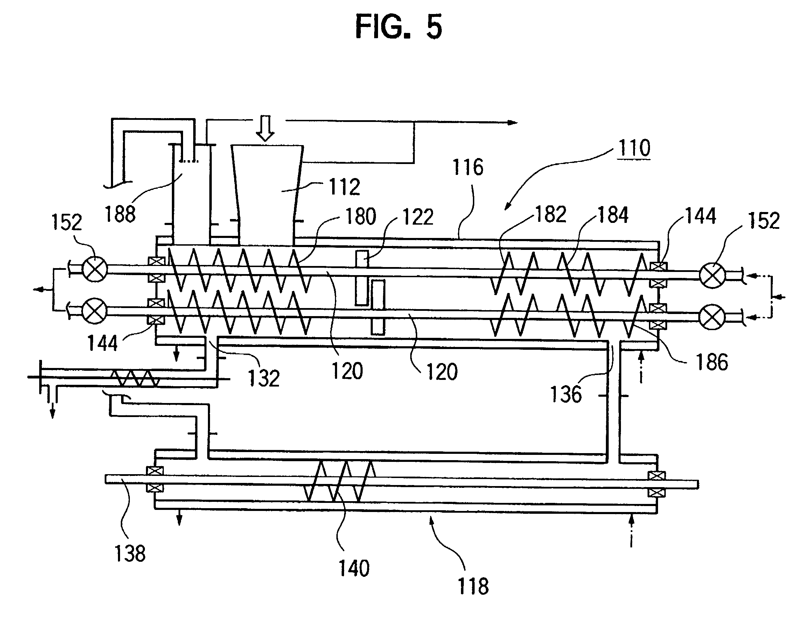

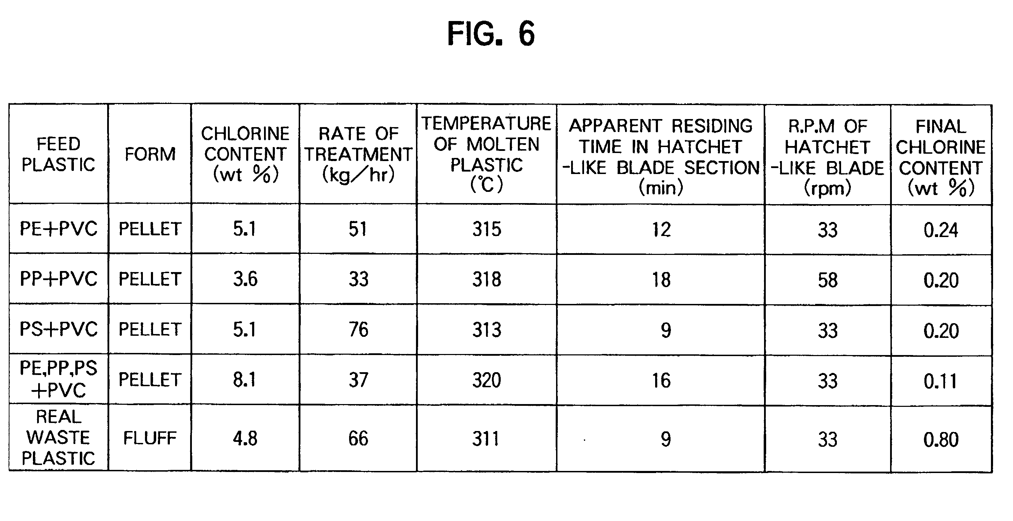

### 2nd Embodiment (FIGS. 5 and 6)

FIG. 5 is a view similar to FIG. 3 but showing a second embodiment of the invention. Note that while two rotary shafts are flush with each other, in reality they are vertically arranged in FIG. 5 for the sake of simplicity.

The components of this embodiment similar to those of the first embodiment are indicated by the same reference numbers to which "100" is added and will not be described any further. Thus, only the features of the second embodiment that differentiate it from the first embodiment will be described hereinafter.

Unlike the first embodiment, this embodiment has a first feature comprising two rotary shafts 120, a second feature in that each of the rotary shafts is provided with screw blades 180, 182, 184 and 186 in addition to hatchet-like blades 122 (only one of which is shown in FIG. 5) and a third feature that a deaeration pot is arranged in the return section of the molten waste plastic return flow-path 118.

The first feature of this embodiment is intended to make the pyrolytic reactor commercially feasible for carrying dechlorination by arranging two rotary shafts 120 in order to raise the capacity of treating waste plastic.

The paired rotary shafts 120 are horizontally separated from each other in such a way that the hatchet-like blades 122 arranged on one the rotary shafts 120 extend close to the outer surface of the other rotary shaft 120, and vice versa. With this arrangement, the molten plastic remaining on and near the outer surface of said one of the rotary shafts 120 is efficiently stirred and kneaded by the hatchet-like blades 122 of the other rotary shaft 120, and vice versa. The rotary shafts 120 rotate in respective directions that are opposite to each other in the reactor shell 16. The rotary shafts 120 are provided with respective internal heating means (not shown), as in the case of the first embodiment.

As for the second feature of this embodiment, while the screw blade 180 of each rotary shaft 120 is arranged on the side of the hopper 112, the remaining screw blades 182, 184 and 186 ofeach rotary shaft 120 are arranged on the side of the draw-out port 136 from the three hatchet-like blades 122 (only one of which is shown in FIG. 5) angularly separated from each other by an angular interval of 120° to the draw-out port 136 in the above mentioned order. More specifically, the screw blades 182 and 186 are backward feeding blades, whereas the screw blade 184 is a forward feeding blade. Each of the screw blades are helically configured in order to enhance the feeding capacity of the embodiment because the hatchet-like blades 122 alone cannot sufficiently move waste plastic forward, if they can stir and knead waste plastic satisfactorily, when the embodiment is used for a commercial application. As seen from FIG. 5, the number of turns of the backward feeding blade 182 is smaller than that of the forward feeding blade 180 so that, while molten plastic may flow rightward in FIG. 5, such flow of molten plastic may be checked, at least partly, and disturbed in front and at the back of the hatchet-like blades 122 to improve the kneading effect of the hatchet-like blades 122. The backward feeding blade 186 is designed to reduced the pressure of molten plastic applied to the bearings 144.

Finally, as for the third feature, the deaeration pot 188 is arranged in order to remove bubbles of hydrogen chloride from molten plastic in view of the fact that, in the case of the first embodiment, bubbles of hydrogen chloride generated as a result of pyrolytic reaction of waste plastic cannot be released from the molten plastic containing them to flow out through the hydrogen chloride outlet port 30 simply by stirring and kneading the molten plastic by an enhanced rate of rotation of the hatchet-like blades because molten plastic is extremely viscous. The inside of the deaeration pot 188 contains a porous plate (not shown) and molten plastic containing bubbles therein is forced to pass through the porous plate to increase the surface area of the passing molten plastic so that the latter may easily release bubbles of hydrogen chloride. The deaeration pot 188 is disposed at a position downstream and close to the molten plastic return flow-path 118 so that bubbles may be removed before the molten plastic fed back to an end of the reactor shell 116 is used to heat the waste plastic supplied from the hopper 112 in order to minimize the adverse effect of the provision of a deaeration pot on thermal transmission efficiency and the flow of molten plastic in the reactor shell 116.

Note that the molten plastic outlet port 132 of this embodiment is located on the side of the hopper 112, unlike in the first embodiment. A heat medium the same as that of the first embodiment is used on the internal and external heating means and the molten plastic return flow-path 118.

An experiment was conducted, using the second embodiment of the pyrolytic reactor for waste plastic to observe the effect of dechlorination. Some of the parameters of the experiment are listed below.

### Experiment Parameters

- reactor shell:: 150φ x 1,645mm, material;carbon steel
- heat transmission area:: external 1.6 m², internal 0.94 m²
- hatchet-like blade:: 11 rows x 3 blades
- return flow-path screw:: cylindrical 100φ x 1,400mm,
material;carbon steel
heat transmission area: external 0.5m²
heat medium temperature: 338 °C

FIG. 6 shows a summary of the results of the experiment.

In FIG. 6, PE, PP and PS respectively stand for polyethylene, polypropylene and polystyrene, while PE.PP.PS stands for a mixture of polyethylene (49.7%), polypropylene (27.3%) and polystyrene (23.0%) and PVC stands for polyvinylchloride (containing chlorine by 35.7%). "Real waste plastic" denotes domestic waste plastic sheets crushed into 1mm square pieces and "pellet" denotes a mixture of each of the listed plastic substances and a PVC compound (containing 37.5% chlorine).

As seen from FIG. 6, when heated to above 310°C, each of the sample materials produced a pyrolyzed final product containing less than about 0.2% chlorine and, in the case of real waste plastic, the chlorine content of the pyrolyzed final product was as low as less than 1%. It was also proved that a feasible dechlorination level can be maintained for both oil and solid fuel in a facility using a pyrolytic reactor according to the invention and having a treating rate capacity of 50kg/hr or more. In other words, a pyrolytic reactor according to the invention is commercially viable if it has practical dimensions.

During the experiment, it was confirmed that the provision of hatchet-like blades can effectively prevent the reactor shell from being clogged by foreign objects.

While the present invention has been described by way of its embodiments, a pyrolytic reactor according to the invention is not limited to the treatment of fluffy waste plastic but is also applicable to pellet-like or crushed pieces of waste plastic.

As described above, since a pyrolytic reactor according to the first aspect of the invention is protected against low temperature corrosion that can be caused by hydrogen chloride, it can enjoy a prolonged service life. Additionally, the reactor shell may be made of carbon steel instead of costly Hastelloy or some other refractory alloy to reduce the overall manufacturing cost of the pyrolytic reactor.

Since a pyrolytic reactor according to the second aspect of the invention can promote the generation of hydrogen chloride by the effective stirring and kneading operation of hatchet-like blades, it is commercially feasible particularly from the viewpoint of its waste plastic processing capacity.

Finally, clogging of the reactor shell of a pyrolytic reactor according to the invention by foreign objects contained in waste plastic is prevented to enhance the operating efficiency of the pyrolytic reactor.

## Claims

1. A pyrolytic reactor (10;110) for waste plastic comprising:
a reactor shell (16;116) having a waste plastic inlet port (26) arranged at a first end and a hydrogen chloride outlet (30;188) and a molten plastic outlet port (32;132) arranged at a second end opposite to said first end;
a heating means (14) arranged between said waste plastic inlet port (26) and said hydrogen chloride outlet port (30;188) to heat the waste plastic in the reactor shell (16;116) from the outside;
a guide means (20;120) for guiding the waste plastic in the reactor shell (16;116) from said first end toward said second end;
a molten plastic return flow-path (18;118) for holding a molten plastic draw-out port (36;136) for drawing out a malten plastic heated to a predetermined temperature between 300°C and 340°C arranged at said second end and a molten plastic feedback port (34) arranged at said first end in communication with each other; and
an internal heating means (42;48-64;152) for internally heating the waste plastic in the reactor shell (16;116).

2. A pyrolytic reactor according to claim 1, wherein said molten plastic return flow-path (18;118) is provided with a liquid transfer means for transferring molten plastic from said molten plastic draw-out port (36;136) to said molten plastic feedback port (34).

3. A pyrolytic reactor according to claim 1 or 2, wherein said guide means (20;120) has a hollow rotary shaft (20;48;50;120) extending longitudinally in said reactor shell (16;116); and
said internal heating means (42;48-64;152) is comprised of a first heating fluid inlet port (54) and a first heating fluid outlet port (58) arranged on the outer surface (50) of said hollow rotary shaft (20;120) and held in communication with the hollow inside (62) of said rotary shaft (20;120) and heating fluid provided to flow in through said first heating fluid inlet port (54), pass through the hollow inside (62) and then flow out through said first heating fluid outlet port (58).

4. A pyrolytic reactor according to claim 3, wherein said reactor shell (16;116) has molten plastic stirring and kneading means (22;122) arranged in the inside thereof.

5. A pyrolytic reactor according to claim 4, wherein said stirring and kneading means (22;122) is hatchet-like blades (22;122) longitudinally arranged on the outer surface of said rotary shaft (20;120).

6. A pyrolytic reactor for waste plastic comprising:
a reactor shell (16;116) having a waste plastic inlet port (26) arranged at a first end and a hydrogen chloride outlet (30;188) and a molten plastic outlet port (32;132) arranged at a second end opposite to said first end;
a heating means (14) arranged between said waste plastic inlet port (26) and said hydrogen chloride outlet port (30;188) to heat the waste plastic in the reactor shell (16;116) from the outside;
a guide means (20;120) for guiding the waste plastic in the reactor shell (16;116) from said first end toward said second end; and
molten plastic stirring and kneading means (22;122) arranged in the inside of said reactor shell (16;116), **characterized in that**
said stirring and kneading means (22;122) are hatchet-like blades (22;122) longitudinally arranged on said rotary shaft (20;120).

## Patentansprüche

1. Pyrolytischer Reaktor (10; 110) für Plastik- bzw. Kunststoffabfall, umfassend:
ein Reaktorgehäuse (16; 116), das eine Kunststoffabfall-Einlaßöffnung (26), die an einem ersten Ende angeordnet ist, und einen Chlorwasserstoff- bzw. Wasserstoffchloridauslaß (30; 188) und eine Auslaßöffnung (32; 132) für geschmolzenen Kunststoff aufweist, die an einem zweiten, dem ersten Ende gegenüberliegenden Ende angeordnet sind;
Heizmittel bzw. -einrichtungen (14), die zwischen der Kunststoffabfall-Einlaßöffnung (26) und der Wasserstoffchlorid-Auslaßöffnung (30; 188) angeordnet. sind, um den Kunststoffabfall in dem Reaktorgehäuse (16; 116) von der Außenseite zu erhitzen;
Führungsmittel bzw. -einrichtungen (20; 120) zum Führen des Kunststoffabfalls in dem Reaktorgehäuse (16; 116) von dem ersten Ende zu dem zweiten Ende;
einen Rückflußweg für geschmolzenen Kunststoff (18; 118), um eine Abzugsöffnung (36; 136) für geschmolzenen Kunststoff zum Abziehen eines auf eine vorbestimmte Temperatur zwischen 300 °C und 340 °C erhitzten Kunststoffes, die an dem zweiten Ende angeordnet ist, und eine Rückführöffnung (34) für geschmolzenen Kunststoff, die an dem ersten Ende angeordnet ist, in Verbindung miteinander zu halten; und
innere Heizmittel bzw. -einrichtungen (42; 48 - 64; 152) zum inneren Erhitzen des Kunststoffabfalls in dem Reaktorgehäuse (16; 116).

2. Pyrolytischer Reaktor nach Anspruch 1, worin der Rückflußweg (18; 118) für geschmolzenen Kunststoff mit Flüssigkeitsübertragungsmitteln bzw.-transfermitteln versehen ist, um geschmolzenen Kunststoff von der Abzugsöffnung (36; 136) für geschmolzenen Kunststoff zu der Rückführöffnung (34) für geschmolzenen Kunststoff zu transferieren bzw. zu führen.

3. Pyrolytischer Reaktor nach Anspruch 1 oder 2, worin die Führungsmittel (20; 120) eine hohle Drehwelle bzw. rotierende Welle (20; 48; 50; 120) aufweisen, die sich in Längsrichtung in dem Reaktorgehäuse (16; 116) erstreckt, und
die inneren Heizmittel (42; 48 - 64; 152) eine erste Heizfluid-Einlaßöffnung (54) und eine erste Heizfluid-Auslaßöffnung (58) beinhalten, die an der Außenoberfläche (50) der hohlen Drehwelle (20; 120) angeordnet sind und in Wechselwirkung bzw. Verbindung mit der hohlen Innenseite (62) der Drehwelle (20; 120) gehalten sind, und Heizfluid, welches zur Verfügung gestellt wird, um durch die erste Heizfluid-Einlaßöffnung (54) einzuströmen, durch die hohle Innenseite (62) hindurchtritt und dann durch die erste Heizfluid-Auslaßöffnung (58) ausströmt.

4. Pyrolytischer Reaktor nach Anspruch 3, worin das Reaktorgehäuse (16; 116) Rühr- und Knetmittel bzw. -einrichtungen (22; 122) für geschmolzenen Kunststoff aufweist, die im Inneren desselben angeordnet sind.

5. Pyrolytischer Reaktor nach Anspruch 4, worin die Rühr- und Knetmittel (22; 122) beilartige Klingen bzw. Schneiden (22; 122) sind, die in Längsrichtung an der Außenfläche der Drehwelle (20; 120) angeordnet sind.

6. Pyrolytischer Reaktor für Plastik- bzw. Kunststoffabfall, umfassend:
ein Reaktorgehäuse (16; 116), das eine Kunststoffabfall-Einlaßöffnung (26), die an einem ersten Ende angeordnet ist, und einen Chlorwasserstoff- bzw. Wasserstoffchloridauslaß (30; 188) und eine Auslaßöffnung (32; 132) für geschmolzenen Kunststoff aufweist, die an einem zweiten, dem ersten Ende gegenüberliegenden Ende angeordnet sind;
Heizmittel (14), die zwischen der Kunststoffabfall-Einlaßöffnung (26) und der Wasserstoffchlorid-Auslaßöffnung (30; 188) angeordnet sind, um den Kunststoffabfall in dem Reaktorgehäuse (16; 116) von der Außenseite zu erhitzen;
Führungsmittel (20; 120) zum Führen des Kunststoffabfalls in dem Reaktorgehäuse (16; 116) von dem ersten Ende zu dem zweiten Ende; und
Rühr- und Knetmittel (22; 122) für geschmolzenen Kunststoff, die im Inneren des Reaktorgehäuses (16; 116) angeordnet sind, **dadurch gekennzeichnet, daß**
die Rühr- und Knetmittel (22; 122) beilartige Klingen (22; 122) sind, die in Längsrichtung an der Drehwelle (20; 120) angeordnet sind.

## Revendications

1. Réacteur pyrolytique (10 ; 110) pour déchets en matière plastique comprenant :
une enceinte de réacteur (16 ; 116) ayant un orifice d'entrée de déchets en matière plastique (26) agencé au niveau d'une première extrémité et une sortie de chlorure d'hydrogène (30 ; 188) et un orifice de sortie de matière plastique fondue (32 ; 132) agencés au niveau d'une seconde extrémité opposée à ladite première extrémité ;
un moyen de chauffage (14) agencé entré ledit orifice d'entrée de déchets en matière plastique (26) et ledit orifice de sortie de chlorure d'hydrogène (30 ; 188) pour chauffer les déchets en matière plastique dans l'enceinte de réacteur (16 ; 116) à partir de l'extérieur ;
un moyen de guidage (20 ; 120) pour guider les déchets en matière plastique dans l'enceinte de réacteur (16 ; 116) depuis ladite première extrémité vers ladite seconde extrémité ;
un chemin d'écoulement de retour de matière plastique fondue (18 ; 118) pour maintenir un orifice d'extraction de matière plastique fondue (36 ; 136), pour extraire de la matière plastique fondue chauffée à une température prédéterminée entre 300 °C et 340 °C, agencé au niveau de ladite seconde extrémité, et un orifice de remontée de matière plastique fondue (34), agencé au niveau de ladite première extrémité, en communication l'un avec l'autre ; et
des moyens de chauffage internes (42 ; 48 à 64 ; 152) pour chauffer de manière interne les déchets en matière plastique dans l'enceinte de réacteur (16 ; 116).

2. Réacteur pyrolytique selon la revendication 1, dans lequel ledit chemin d'écoulement de retour de matière plastique fondue (18 ; 118) est muni d'un moyen de transfert de liquide pour le transfert de la matière plastique fondue depuis ledit orifice d'extraction de matière plastique fondue (36 ; 136) vers ledit orifice de remontée de matière plastique fondue (34).

3. Réacteur pyrolytique selon la revendication 1 ou 2, dans lequel ledit moyen de guidage (20 ; 120) possède un arbre rotatif creux (20 ; 48 ; 50 ; 120) s'étendant de façon longitudinale dans ladite enceinte de réacteur (16 ; 116) ; et
lesdits moyens de chauffage internes (42 ; 48 à 64 ; 152) sont constitués par un premier orifice d'entrée de fluide de chauffage (54) et par un premier orifice de sortie de fluide de chauffage (58) agencés sur la surface extérieure (50) dudit arbre rotatif creux (20 ; 120) et maintenus en communication avec l'intérieur creux (62) dudit arbre rotatif (20 ; 120) et par un fluide de chauffage prévu pour s'écouler à travers ledit premier orifice d'entrée de fluide de chauffage (54), pour passer par l'intérieur creux (62) et pour s'écouler ensuite à travers ledit premier orifice de sortie de fluide de chauffage (58).

4. Réacteur pyrolytique selon la revendication 3, dans lequel ladite enceinte de réacteur (16 ; 116) possède un moyen d'agitation et de malaxage de matière plastique fondue (22 ; 122) agencé à l'intérieur de cette dernière.

5. Réacteur pyrolytique selon la revendication 4, dans lequel ledit moyen d'agitation et de malaxage (22 ; 122) est constitué par des lames semblables à des hachettes (22 ; 122) agencées de façon longitudinale sur la surface extérieure dudit arbre rotatif (20 ; 120).

6. Réacteur pyrolytique pour déchets en matière plastique comprenant :
une enceinte de réacteur (16 ; 116) ayant un orifice d'entrée de déchets en matière plastique (26) agencé au niveau d'une première extrémité et une sortie de chlorure d'hydrogène (30 ; 188) et un orifice de sortie de matière plastique fondue (32 ; 132) agencés au niveau d'une seconde extrémité opposée à ladite première extrémité ;
un moyen de chauffage (14) agencé entre ledit orifice d'entrée de déchets en matière plastique (26) et ledit orifice de sortie de chlorure d'hydrogène (30 ; 188) pour chauffer les déchets en matière plastique dans l'enceinte de réacteur (16 ; 116) à partir de l'extérieur ;
un moyen de guidage (20 ; 120) pour guider les déchets en matière plastique dans l'enceinte de réacteur (16 ; 116) depuis ladite première extrémité vers ladite seconde extrémité ; et
un moyen d'agitation et de malaxage de matière plastique fondue (22 ; 122) agencé à l'intérieur de ladite enceinte de réacteur (16 ; 116), **caractérisé en ce que**
ledit moyen d'agitation et de malaxage (22 ; 122) est constitué par des lames semblables à des hachettes (22 ; 122) agencées de façon longitudinale sur ledit arbre rotatif (20 ; 120).
